# EUROPEAN PATENT APPLICATION

(11) **EP 1 459 836 A2**
(43) Date of publication of application: **22.09.2004**
(21) Application number: 03380159.8
(22) Date of filing: 01.07.2003
(51) Int. Cl.: B23K 26/40

(54) **Method for cutting of fabric surface fibers**

(30) Priority: 21.03.2003 ES 200300667
(71) Applicant: Desarrollos Industriales del laser, s.l., 08211 Castellar del Valles (Barcelona) (ES)
(72) Inventor: Pinosa Torras, Joan, 08211 Castellar del Valles (Barcelona) (ES)
(74) Representative: Davila Baz, Angel

(57) **Abstract**

A method for the cutting of fabric surface fibers by means of the application of a laser-type radiation on a predetermined contour area, comprising the steps of: a) setting the predetermined contour area; b) arranging the fabric to be treated on a flat surface, which shifts the fabric with controlled movement; c) positionally regulating the optics as well as the head of the system in order to determine the area as well as the area contour; and d) applying a pulsating actuation laser radiation on the selected area. The invention permits obtaining the print of a motif or design on fabric with surface fibers.

## Description

The present invention refers to a method for the cutting of fabric surface fibers, which permits carrying out a controlled cutting of natural as well as artificial fibers, on a determined area, by means of laser technology.

The application of laser technology to modify the dye affinity of textile materials is already well known. By means of this technology, a thermal effect is achieved capable of modifying the surface structure of the fibers, and with that, the dye affinity of non-dyed textile materials, particularly of manufactured textile garments carried out with natural fibers.

With this technology, the garments are subjected to a final dyeing and subsequent washing process after the application of the laser to obtain the desired effect.

The object of the present invention is to obtain the print of a motif or design on a fabric with surface fibers by means of the application of a laser radiation, and without subsequent dyeing operations being necessary to achieve the desired effect.

To do so, according to the invention, the laser radiation applied complies with specific features which permit obtaining the cutting or shaving of the fibers in a predetermined area, such that a relief effect is achieved on the fabric surface, which relief effect translates into a specific drawing.

The method of the invention is applicable to any type of fabric, from silk to velvet, and the length of the cut fiber always being controlled, the fabric being able to be made of natural or artificial fibers. The method of the invention is applicable to fabrics which can be from rolls or rolled sheets with indefinite length.

In the process of the invention, once the cutting or shaving of the fibers has been carried out, the fabric needs no subsequent treatment, since, by means of said cutting, the desired drawing to be printed on the fabric is obtained.

The method of the invention, carried out by means of the application of a laser-type radiation on a predetermined contour area, is computer operated and comprises the following steps:
a) Introducing the design or designs to be carried out into the operative program. These designs can be from drawings carried out directly, from scanned images or originating from design sources, or from any other type of design transferable to the operative program.
b) Arranging the fabric to be treated on a table or transfer press, having a flat surface, which can be horizontal or vertical. This process table or transfer press can have a fixed base, with intermittent or continuous movement, and will permit the fabric to be treated with a controlled feed movement.
c) Positionally regulating the optics as well as the system head by means of movements according to two axes in order to determine the area as well as the contour of the area to be treated.

Application in the selected area of a CO₂ laser radiation with pulsating actuation and activated by radio frequency, such that it permits the control of the power as well as the turning on and turning off of the laser, in each pulse, all this for the purpose of obtaining the cutting or shaving of the fibers.

In the case that the image or images to print are unique for each treated piece, once the cutting of the fibers in the desired area is obtained, the piece is changed. Otherwise, if the image is multiple or repeats on the same piece and exceeds the action area, for example in pieces of greater than 1.5 meters in width and/or length, the head will shift to the position where the next processing block is to be carried out.

On the other hand, according to the length of the cut fiber, when acting on short fibers, the product will be ready for the next manufacturing or delivery phase or process, whereas when applied on long fibers, it is enough to carry out a brushing or suction on the product in order to remove or withdraw the debris.

With the method of the invention, the reproduction of designs or drawings on woven fabrics with surface gibers is obtained by means of the described laser technology application, thus facilitating the operative activity and eliminating any addition of chemical products and additional substances in the transfer of designs, the product being processed and ready once the fiber cutting or shaving operation has been completely carried out.

The method of the invention is especially indicated for the decoration by means of the transfer of any design onto any fabric surface, whether natural or artificial fibers.

The application of the method of the invention requires the presence of fibers on the surface of the product to be treated as a fundamental condition, whenever the effect of the method is based on the controlled cutting of said fibers.

By means of the control of the power of the laser beam applied, the method of the invention permits the simple cutting of fibers, without affecting the connection base, up to the perforation of said base, in any case depending on the design or effect that is intended to be achieved.

The method of the invention, with the fiber cutting or shaving system by laser through a computer, obtains a very fast and precise reproduction of designs, which requires no prior preparation of the fabric, with a reduced cost. The method furthermore permits its application in areas comprised between 100 x 100 mm up to 1,500 x 1,500, with no need to alter any configuration.

Compared to the known processes, the method of the invention does not seek to modify the dye affinity of fibers, but rather the cutting or shaving thereof, thereby achieving a decrease in the thickness of the fabric in the applied area, without affecting or altering the fabric and the weft of the threads, nor altering the resistance thereof.

In the method of the invention, by using a radio frequency pulsed and actuated CO₂ laser, both the power and the turning on and turning off of the laser can be controlled in each pulse. If it has a pulsing arrangement of up to 100 KHz, the shaving control and precision of the design are increased and completely controlled, such that the power can be regulated at a speed of 100 microseconds.

On the other hand, by means of a pulsating action CO₂ laser, the frequency as well as intensity and duration time of each pulse are controlled.

In the method of the invention, different values will be used according to the nature of the fiber constituting the fabric to be treated. The obtained results will be a completely uniform shaving of fibers, being able to accurately vary the height of them according to the design.

The invention definitively permits starting from a roll of fabric, the incorporation thereon of designs or images, the fabric being in controlled feed movement according to one direction. On the other hand, the two axis moving the optics of the galvanometric scanner and/or movement of optics which cause the deviation of the laser beam, will permit achieving the programmed designs.

The method of the invention permits operating with a nominal laser power comprised between 50 and 250 Watts, with a pulse emission frequency comprised between 0 and 100 KHz, and having a pulse duration of less than 90 microseconds. The focalized laser beam diameter can range between 1 and 2.5 mm.

## Claims

1. A method for the cutting of fabric surface fibers by means of the application of a laser-type radiation and on a predetermined contour area, computer-operated, in order to obtain a design, **characterized in that** it comprises the steps of:
a) introducing the contour of the area whose fibers are to be cut;
b) arranging the fabric to be treated on a flat table or transfer press, where the fabric is shifted with a controlled feed movement;
c) positionally regulating the optics as well as the head of the system, by means of movements according to two axes, in order to determine the area as well as the contour of the area; and
d) applying to the selected area a CO₂ laser radiation of pulsating actuation and radio frequency actuated, such that it permits the control of the power as well as the turning on and turning off of the laser in each pulse in order to produce the cutting or shaving of the fibers.

2. A method according to claim 1, **characterized in that** the applied laser radiation is of pulsating actuation, with a frequency comprised between 0 and 100 KHz.

3. A method according to claims 1 and 2, **characterized in that** the laser radiation is applied for a time of less than 90 microseconds and with a wavelength comprised between 10.2 and 10.4.

4. A method according to the previous claims, **characterized in that** the laser radiation is applied on an area comprised between 4 x 10⁴ and 225 x 10⁴ mm².
